# EUROPÄISCHE PATENTSCHRIFT

(11) **EP 1 470 888 B1**
(45) Veröffentlichungstag und Bekanntmachung des Hinweises auf die Patenterteilung: **25.01.2006**
(21) Anmeldenummer: 04003980.2
(22) Anmeldetag: 21.02.2004
(51) Int. Cl.: B23P 11/02, H05B 6/14

(54) **Vorrichtung und Verfahren zum Abkühlen eines Schrumpffutters**
Device and method for cooling of a shrink fit chuck
Dispositif et méthode de refroidissement de mandrin à ajustement fretté

(30) Priorität: 23.04.2003 DE 10320641
(43) Veröffentlichungstag der Anmeldung: 27.10.2004
(73) Patentinhaber: HELMUT DIEBOLD GmbH & CO., GOLDRING-WERKZEUGFABRIK, D-72417 Jungingen (DE)
(72) Erfinder: Diebold, Hermann, 72379 Hechingen (DE)
(74) Vertreter: Pfiz, Thomas

(56) Entgegenhaltungen:
- PATENT ABSTRACTS OF JAPAN vol. 2002, no. 07, 3. Juli 2002 (2002-07-03) -& JP 2002 079426 A (MIYADEN CO LTD), 19. März 2002 (2002-03-19)

## Beschreibung

Die Erfindung betrifft eine Kühlvorrichtung für Schrumpffutter mit einem Flüssigkeitskühler zur Wärmeabfuhr aus dem Schrumpffutter und ein entsprechendes Abkühlverfahren gemäß dem Oberbegriff des Patentanspruchs 1 bzw. 12.

Als Schrumpffutter ausgebildete Werkzeughalter besitzen eine Aufnahmebohrung, die sich durch Wärmedehnung auf ein Übermaß bezogen auf einen Werkzeugschaft aufweiten lässt, so dass das Werkzeug einsetzbar bzw. herausnehmbar ist und im abgekühlten Zustand koaxial im Presssitz gehalten wird. Zum Fügen und Lösen des Pressverbandes ist es bekannt, den Futterkörper induktiv aufzuheizen, wobei dann eine gewisse Abkühlzeit abgewartet werden muss, bis das Schrumpffutter mit dem darin eingeschrumpften Werkzeug auf seine Einsatztemperatur abgekühlt ist. Zur Minimierung der Abkühlzeit ist es aus der DE-A 10025 004 bekannt, eine Hülse vorzusehen, die als Kühladapter durch hindurchströmende Kühlflüssigkeit gekühlt wird und in großflächigen Berührungs- bzw. Wärmeleitkontakt mit dem Schrumpffutter gebracht werden muss, um eine schnelle Wärmeabfuhr zu ermöglichen. Als nachteilig wird dabei angesehen, dass eine genaue Anpassung des Adapters an die Außenkontur des jeweils verwendeten Schrumpffutters erforderlich ist, wobei auch der Werkzeugdurchmesser durch die Adapterbohrung beschränkt ist. Hinzu kommt, dass beim Aufsetzen des Adapters auf Schneidwerkzeuge die Gefahr besteht, dass die Werkzeugschneiden anstoßen und beschädigt werden.

Die JP-A 2002 079426 beschreibt eine gattungsgemäße Kühlvorrichtung mit Flüssigkeitskühler, wobei ein Werkzeughalter mit einem Hubschlitten in einen unteren Bereich eines Gehäuses bewegbar ist, welcher seitlich an ein Reservoir angrenzt und daraus über Spritzlöcher eines Kühlmantels mit Flüssigkeit beaufschlagbar ist. Anstelle eines Kühlmantels wird auch vorgeschlagen, den Werkzeughalter direkt in die Kühlflüssigkeit abzusenken.

Ausgehend hiervon liegt der Erfindung die Aufgabe zugrunde, die eine Vorrichtung und ein Verfahren der eingangs angegebenen Art dahingehend zu verbessern, dass die Abkühl- bzw. Schrumpfzykluszeit reduziert wird, Kontureinschränkungen weitgehend vermieden werden und eine einfache und sichere Handhabung gewährleistet ist.

Zur Lösung dieser Aufgabe wird die im Patentanspruch 1 bzw. 12 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Abkühlung des werkzeugbestückten Schrumpffutters durch direkten Flüssigkeitskontakt im Tauchbad zu beschleunigen. Dementsprechend wird erfindungsgemäß vorgeschlagen, dass die Tauchkammer durch eine über dem Reservoir liegende Aufnahmesäule für das Schrumpffutter gebildet ist, und dass das Schrumpffutter unter Anhebung des Flüssigkeitsspiegels in der Aufnahmesäule mit der Kühlflüssigkeit umspülbar ist. Damit ist eine weitgehend konturunabhängige, nur durch das Fassungsvermögen der Tauchkammer beschränkte Aufnahme von Schrumpffuttern möglich. Außerdem ist es dadurch auf einfache Weise möglich, den Werkzeughalter mit Kühlflüssigkeit zu beaufschlagen, ohne dass eine aufwendige Mechanik erforderlich wäre. Durch den direkten Wärmeübergang in die Kühlflüssigkeit wird eine schnelle Abkühlung erreicht, wobei durch die Flüssigkeitsbeaufschlagung keine Beschädigungsgefahr besteht und gegebenenfalls sogar noch ein Reinigungseffekt erzielt werden kann.

Dabei ist es von Vorteil, wenn das Reservoir zum Verdrängen von Kühlflüssigkeit in die Tauchkammer mit Druckgas beaufschlagbar ist und zum Rückleiten der verdrängten Kühlflüssigkeit druckfrei schaltbar ist. Günstig ist es auch, wenn die Aufnahmesäule über eine untere Einlassöffnung mit dem Reservoir kommuniziert.

Eine Variante der Erfindung besteht darin, dass die Tauchkammer zum Ansaugen von Kühlflüssigkeit aus dem Reservoir mittels einer Saugeinrichtung gegenüber der Umgebung auf Unterdruck bringbar ist. Denkbar ist es auch, dass das Volumen des Reservoirs durch ein beispielsweise als Kolben ausgebildetes Verdrängerelement zum Verdrängen von Kühlflüssigkeit in die Tauchkammer verkleinerbar ist.

Vorteilhafterweise weist die Tauchkammer eine flüssigkeitsdicht verschließbare Türe zum Einbringen des Schrumpffutters auf. Zur weiteren Verbesserung der Handhabung ist es von Vorteil, wenn in der Tauchkammer eine Halterung oder Stellplatte zur Aufnahme des Schrumpffutters angeordnet ist.

Gemäß einer bevorzugten Ausführung der Erfindung ist in der Tauchkammer eine Einblasöffnung oder Düse zum Einblasen von Gas in die Kühlflüssigkeit vorgesehen. Dadurch kann die Kühlflüssigkeit verwirbelt werden und somit eine noch effektivere Kühlung erreicht werden.

Um den Arbeitszyklus weiter zu beschleunigen, ist es von Vorteil, wenn das Schrumpffutter in der Tauchkammer bei abgelassener Kühlflüssigkeit vorzugsweise über seitliche Ausblasöffnungen aufweisende Düsenrohre mit Druckgas zum Trocknen beaufschlagbar ist.

Gemäß einer weiteren vorteilhaften Ausgestaltung ist eine Ablage für das Schrumpffutter vorgesehen, wobei in der Ablage ein durch ein Rückschlagventil absperrbarer Rücklaufkanal zum Zurückleiten von Tropfwasser in das Reservoir angeordnet ist.

Ein vorteilhafter Zusatznutzen des Tauchbads kann dadurch erreicht werden, dass die Kühlflüssigkeit ein Reinigungs- und/oder Korrosionsschutzmittel für das Schrumpffutter enthält.

In verfahrensmäßiger Hinsicht wird die eingangs genannte Aufgabe dadurch gelöst, dass das Schrumpffutter in der durch eine über dem Reservoir liegende Aufnahmesäule für das Schrumpffutter gebildeten Tauchkammer durch Anheben des Flüssigkeitsspiegels mit Kühlflüssigkeit beaufschlagt wird.

Im folgenden wird die Erfindung anhand eines in der Zeichnung in schematischer Weise dargestellten Ausführungsbeispiels näher erläutert. Es zeigen
- Fig. 1: ein Kühlgerät zum Abkühlen von Schrumpffuttern im Wasserbad in einer perspektivischen, teilweise aufgebrochenen Darstellung; und
- Fig. 2: das Kühlgerät nach Fig. 1 im Vertikalschnitt in der Längsmittelebene.

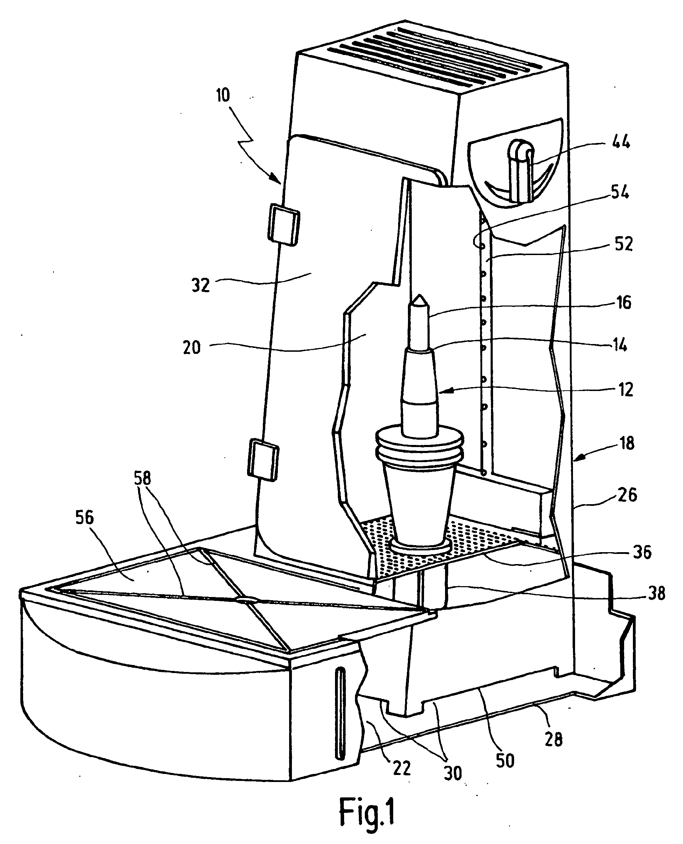

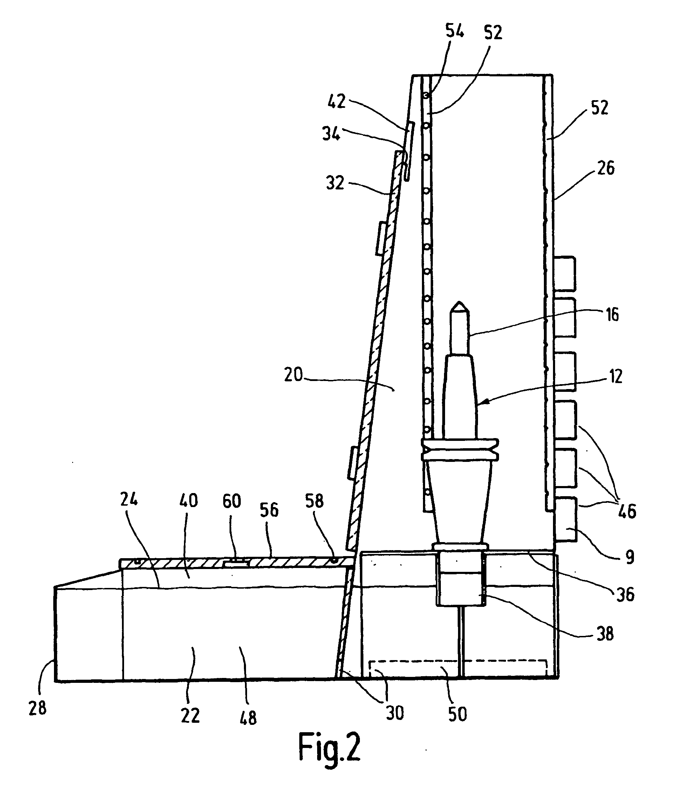

Das in Fig. 1 und 2 dargestellte Kühlgerät 10 dient zur raschen Wärmeabfuhr aus einem Schrumpffutter 12, welches eine beispielsweise durch induktives Erwärmen aufweitbare Werkzeugaufnahme 14 zum Einschrumpfen eines Schaftwerkzeugs 16, insbesondere eines Bohrers oder Fräsers aufweist. Um die Abkühlzeit zu reduzieren, ist das Kühlgerät 10 mit einem Flüssigkeitskühler 18 ausgestattet. Dieser weist eine zur Aufnahme des Schrumpffutters 12 ausgebildete Tauchkammer 20 auf, die aus einem Reservoir 22 mit Wasser als Kühlflüssigkeit befüllbar ist.

Das Schrumpffutter 12 lässt sich in der Tauchkammer 20 unter Anhebung des Flüssigkeitsspiegels 24 mit dem Kühlwasser umspülen. Zu diesem Zweck ist die Tauchkammer 20 durch eine über das Reservoir 22 nach oben überstehende Aufnahmesäule 26 begrenzt, welche in eine das Reservoir 22 bildende Behälterwanne 28 eingestellt ist, wobei die Aufnahmesäule 26 bzw. die Tauchkammer 20 über eine bodenseitige Einlassöffnung 30 mit dem Reservoir 22 kommuniziert.

Zum Einstellen des Schrumpffutters 12 bei abgesenktem Flüssigkeitsspiegel 24 ist in der Aufnahmesäule 26 eine Glastüre 32 vorgesehen, die über eine umlaufende Dichtung 34 flüssigkeitsdicht verschließbar ist. In der Aufnahmesäule 26 ist eine Halterung 36 angeordnet, die mit einer Aufnahmehülse 38 zur Zentrierung des Schrumpffutters in einer vertikalen Ausrichtung versehen ist.

Die Tauchkammer 20 lässt sich durch Druckluftbeaufschlagung eines über dem Flüssigkeitsspiegel 24 in dem Reservoir 22 liegenden Druckraums 40 fluten. Aus Sicherheitsgründen wird der Schließzustand der Glastüre 32 mittels Fühler 42 erfasst und die Druckluft freigeschaltet, wobei dann das Fluten durch Betätigung des Schalters 44, ggf. aber auch automatisch gestartet werden kann. Über eine Pneumatikanordnung 46 an der Rückseite der Aufnahmesäule 26 wird die Druckluft durch nicht gezeigte Leitungen in den Druckraum 40 geleitet, so dass das Kühlwasser 48 durch die bodenseitige Einlassöffnung 30 in die Aufnahmesäule 26 verdrängt wird und der Flüssigkeitsspiegel in der Tauchkammer 20 ansteigt. Das Kühlwasser 48 wird dabei so lange in die Aufnahmesäule 26 gepresst, bis der Flüssigkeitsspiegel 24 in dem Reservoir 22 unter die Einlassöffnung 30 absinkt. In diesem Zustand ist das Schrumpffutter 12 vollständig von dem Kühlwasser 48 umspült bzw. in dieses eingetaucht. Die weiter nachströmende Druckluft wird über die zugleich als Gasdurchlass 50 wirkenden Bodenöffnungen 30 in die Aufnahmesäule 26 gepresst und verwirbelt dort das Kühlwasser, was zu einer schnelleren Kühlung beiträgt.

Nach wenigen Sekunden kann über den Schalter 44 die Druckluftzufuhr unterbrochen und das Auslassventil 9 geöffnet werden, um den Druckraum 40 wieder drucklos zu schalten, so dass das Kühlwasser 48 wieder aus der Tauchkammer 20 in das Reservoir 22 zurückströmt.

Bei abgelassenem Kühlwasser wird das Schrumpffutter 12 zum Trocknen über drei in Umfangsrichtung verteilte Düsenrohre 52, die mit einer Vielzahl von seitlichen Ausblasöffnungen 54 versehen sind, mit Druckluft angeblasen. Sodann wird das Schrumpffutter 12 aus der Aufnahmesäule 26 entnommen und gegebenenfalls zum vollständigen Abtrocknen auf einer über dem Reservoir 22 angeordneten Ablageplatte 56 abgestellt. Diese weist Rücklaufkanäle 58 auf, die zum Zurückleiten von Tropfwasser über ein Rückschlagventil 60 in das Reservoir 22 münden.

Zusammenfassend ist folgendes festzuhalten: Die Erfindung betrifft eine Kühlvorrichtung für Schrumpffutter 12 mit einem Flüssigkeitskühler 18 zur Wärmeabfuhr aus dem Schrumpffutter 12 unter Einschrumpfen eines in eine thermisch aufgeweitete Werkzeugaufnahme 14 des aufgeheizten Schrumpffutters 12 eingesetzten Werkzeugs (16). Um die Abkühlzeit weitgehend unabhängig von der Form des Schrumpffutters zu reduzieren, wird vorgeschlagen, dass der Flüssigkeitskühler 18 eine zur Aufnahme des Schrumpffutters 12 ausgebildete, mit Kühlflüssigkeit 48 befüllbare Tauchkammer 20 aufweist, die über einem Reservoir 22 für Kühlflüssigkeit angeordnet ist, wobei das Schrumpffutter durch Anheben des Flüssigkeitsspiegels 24 mit Kühlflüssigkeit beaufschlagt wird.

## Patentansprüche

1. Kühlvorrichtung für Schrumpffutter (12) mit einem Flüssigkeitskühler (18) zur Wärmeabfuhr aus dem Schrumpffutter (12) unter Einschrumpfen eines in eine thermisch aufgeweitete Werkzeugaufnahme (14) des aufgeheizten Schrumpffutters (12) eingesetzten Werkzeugs (16), wobei der Flüssigkeitskühler (18) eine zur Aufnahme des Schrumpffutters (12) ausgebildete, mit Kühlflüssigkeit (48) befüllbare Tauchkammer (20) aufweist, und mit einem Reservoir (22) für Kühlflüssigkeit (48) zum wahlweisen Fluten und Entleeren der Tauchkammer (20), **dadurch gekennzeichnet, dass** die Tauchkammer (20) durch eine über dem Reservoir (22) liegende Aufnahmesäule (26) für das Schrumpffutter (12) gebildet ist, und dass das Schrumpffutter (12) unter Anhebung des Flüssigkeitsspiegels in der Aufnahmesäule (26) mit der Kühlflüssigkeit (48) umspülbar ist.

2. Kühlvorrichtung nach Anspruch 1, **dadurch gekennzeichnet, dass** das Reservoir (22) zum Verdrängen von Kühlflüssigkeit (48) in die Tauchkammer (20) mit Druckgas beaufschlagbar ist und zum Rückleiten der verdrängten Kühlflüssigkeit (48) druckfrei schaltbar ist.

3. Kühlvorrichtung nach Anspruch 1 oder 2, **dadurch gekennzeichnet, dass** die Aufnahmesäule (26) über eine untere Einlassöffnung (30) mit dem Reservoir (22) kommuniziert.

4. Kühlvorrichtung nach einem der Ansprüche 1 bis 3, **dadurch gekennzeichnet, dass** die Tauchkammer (20) zum Ansaugen von Kühlflüssigkeit (48) aus dem Reservoir (22) mittels einer Saugeinrichtung gegenüber der Umgebung auf Unterdruck bringbar ist.

5. Kühlvorrichtung nach einem der Ansprüche 1 bis 4, **dadurch gekennzeichnet, dass** das Volumen des Reservoirs (22) durch ein beispielsweise als Kolben ausgebildetes Verdrängerelement zum Verdrängen von Kühlflüssigkeit (48) in die Tauchkammer (20) verkleinerbar ist.

6. Kühlvorrichtung nach einem der Ansprüche 1 bis 5, **dadurch gekennzeichnet, dass** die Tauchkammer (20) eine flüssigkeitsdicht verschließbare Türe (32) zum Einbringen des Schrumpffutters (12) aufweist.

7. Kühlvorrichtung nach einem der Ansprüche 1 bis 6, **dadurch gekennzeichnet, dass** in der Tauchkammer (20) eine Halterung (36,38) oder Stellplatte zur Aufnahme des Schrumpffutters (12) angeordnet ist.

8. Kühlvorrichtung nach einem der Ansprüche 1 bis 7, **dadurch gekennzeichnet, dass** in der Tauchkammer (20) eine Einblasöffnung (50) oder Düse zum Einblasen von Gas in die Kühlflüssigkeit (48) vorgesehen ist.

9. Kühlvorrichtung nach einem der Ansprüche 1 bis 8, **dadurch gekennzeichnet, dass** das Schrumpffutter (12) in der Tauchkammer (20) bei abgelassener Kühlflüssigkeit (48) vorzugsweise über seitliche Ausblasöffnungen (54) aufweisende Düsenrohre (52) mit Druckgas zum Trocknen beaufschlagbar ist.

10. Kühlvorrichtung nach einem der Ansprüche 1 bis 9, **gekennzeichnet durch** eine Ablage (56) für das Schrumpffutter (12), wobei in der Ablage (56) ein **durch** ein Rückschlagventil (60) absperrbarer Rücklaufkanal (58) zum Zurückleiten von Tropfwasser in das Reservoir (22) angeordnet ist.

11. Kühlvorrichtung nach einem der Ansprüche 1 bis 10, **dadurch gekennzeichnet, dass** die Kühlflüssigkeit (48) ein Reinigungs-und/oder Korrosionsschutzmittel für das Schrumpffutter (12) enthält.

12. Verfahren zum Abkühlen eines Schrumpffutters (12) bei welchem mittels eines Flüssigkeitskühlers (18) Wärme aus dem Schrumpffutter (12) abgeführt und dabei ein in eine thermisch aufgeweitete Werkzeugaufnahme (14) des erwärmten Schrumpffutters (12) eingesetztes Werkzeug (16) eingeschrumpft wird, wobei das Schrumpffutter (12) in eine Tauchkammer (20) des Flüssigkeitskühlers (18) eingebracht und darin mit Kühlflüssigkeit (48) umspült wird, **dadurch gekennzeichnet, dass** das Schrumpffutter (12) in der durch eine über dem Reservoir (22) liegende Aufnahmesäule (26) für das Schrumpffutter (12) gebildeten Tauchkammer (20) durch Anheben des Flüssigkeitsspiegels (24) mit Kühlflüssigkeit (48) beaufschlagt wird.

## Claims

1. Cooling device for shrink fit chucks (12) having a liquid cooler (18) for removing heat from the shrink fit chuck (12) while simultaneously shrinking a tool (16) that has been inserted into a thermally expanded tool holder (14) of the heated shrink fit chuck (12), wherein the liquid cooler (18) has an immersion chamber (20) designed to receive the shrink fit chuck (12) and fillable with cooling liquid (48), and having a reservoir (22) for cooling liquid (48) for selective flooding and draining of the immersion chamber (20), **characterized in that** the immersion chamber (20) is formed by a receiving column (26) for the shrink fit chuck (12) that lies above the reservoir (22), and that by raising the liquid level in the receiving column (26) the cooling liquid (48) is flowable around the shrink fit chuck (12).

2. Cooling device according to claim 1, **characterized in that** the reservoir (22) is loadable with compressed gas to displace cooling liquid (48) into the immersion chamber (20) and is switchable to a pressure-free state to return the displaced cooling liquid (48).

3. Cooling device according to claim 1 or 2, **characterized in that** the receiving column (26) communicates via a bottom inlet opening (30) with the reservoir (22).

4. Cooling device according to one of claims 1 to 3, **characterized in that** the immersion chamber (20) for the intake of cooling liquid (48) from the reservoir (22) is bringable by means of a suction device to a pressure below atmospheric pressure.

5. Cooling device according to one of claims 1 to 4, **characterized in that** for the displacement of cooling liquid (48) into the immersion chamber (20) the volume of the reservoir (22) may be reduced by means of a displacement element designed for example as a piston.

6. Cooling device according to one of claims 1 to 5, **characterized in that** for introduction of the shrink fit chuck (12) the immersion chamber (20) has a door (32) that is closable in a liquid-tight manner.

7. Cooling device according to one of claims 1 to 6, **characterized in that** a mounting (36, 38) or positioning plate for receiving the shrink fit chuck (12) is disposed in the immersion chamber (20).

8. Cooling device according to one of claims 1 to 7, **characterized in that** in the immersion chamber (20) a blow-in opening (50) or nozzle is provided for blowing gas into the cooling liquid (48).

9. Cooling device according to one of claims 1 to 8, **characterized in that** the shrink fit chuck (12) in the immersion chamber (20) after draining of the cooling liquid (48) may preferably be acted upon by compressed gas for drying purposes via nozzle tubes (52) having lateral blow-out openings (54).

10. Cooling device according to one of claims 1 to 9, **characterized by** a tray (56) for the shrink fit chuck (12), wherein a return channel (58), which is blockable by means of a check valve (60), is disposed in the tray (56) for conveying dripping water back into the reservoir (22).

11. Cooling device according to one of claims 1 to 10, **characterized in that** the cooling liquid (48) contains a cleaning and/or anticorrosive agent for the shrink fit chuck (12).

12. Method of cooling a shrink fit chuck (12), whereby by means of a liquid cooler (18) heat is removed from the shrink fit chuck (12) whilst simultaneously shrinking a tool (16) that has been inserted into a thermally expanded tool holder (14) of the heated shrink fit chuck (12), wherein the shrink fit chuck (12) is introduced into an immersion chamber (20) of the liquid cooler (18) where cooling liquid (48) flows around it, **characterized in that** the shrink fit chuck (12) is acted upon by cooling liquid (48) by raising the liquid level (24) in the immersion chamber (20), which is formed by a receiving column (26) for the shrink fit chuck (12) that lies above the reservoir (22).

## Revendications

1. Dispositif de refroidissement pourmandrin de frettage (12), comprenant un refroidisseur à liquide (18) pour évacuer la chaleur du mandrin de frettage (12) entraînant le retrait d'un outil (16) logé dans un porte-outil (14) dilaté à chaud du mandrin de frettage (12) chauffé, le refroidisseur à liquide (18) présentant une chambre d'immersion (20) conçue pour recevoir le mandrin de frettage (12) et pouvant être remplie de liquide de refroidissement (48), et un réservoir (22) pour du liquide de refroidissement (48) pour remplir ou vider la chambre d'immersion (20), **caractérisé en ce que** la chambre d'immersion (20) est formée par une colonne de réception (26) pour le mandrin de frettage (12), qui est située au-dessus du réservoir (22), et **en ce que** le mandrin de frettage (12) peut baigner dans le liquide de refroidissement (48) en élevant le niveau de liquide dans la colonne de réception (26).

2. Dispositif de refroidissement selon la revendication 1, **caractérisé en ce que** le réservoir (22) peut être sollicité par du gaz sous pression pour déplacer du liquide de refroidissement (48) dans la chambre d'immersion (20) et être ramené à la pression atmosphérique pour y faire revenir le liquide de refroidissement déplacé (48).

3. Dispositif de refroidissement selon la revendication 1 ou 2, **caractérisé en ce que** la colonne de réception (26) communique avec le réservoir (22) par le biais d'une ouverture d'admission inférieure (30).

4. Dispositif de refroidissement selon l'une des revendications 1 à 3, **caractérisé en ce que**, pour aspirer du liquide de refroidissement (48) dans le réservoir (22), la chambre d'immersion (20) peut être mise en dépression vis-à-vis de l'environnement au moyen d'un dispositif d'aspiration.

5. Dispositif de refroidissement selon l'une des revendications 1 à 4, **caractérisé en ce que** le volume du réservoir (22) peut être réduit par un élément de déplacement, par exemple réalisé sous forme de piston, pour déplacer du liquide de refroidissement (48) dans la chambre d'immersion (20).

6. Dispositif de refroidissement selon l'une des revendications 1 à 5, **caractérisé en ce que** la chambre d'immersion (20) présente une porte (32) pouvant être fermée de manière étanche pour y introduire le mandrin de frettage (12).

7. Dispositif de refroidissement selon l'une des revendications 1 à 6, **caractérisé en ce qu'**un dispositif de fixation (36, 38) ou une plaque de support est disposé(e) dans la chambre d'immersion (20) pour recevoir le mandrin de frettage (12).

8. Dispositif de refroidissement selon l'une des revendications 1 à 7, **caractérisé en ce qu'**une ouverture d'insufflation (50) ou une buse est prévue dans la chambre d'immersion (20) afin d'insuffler du gaz dans le liquide de refroidissement (48).

9. Dispositif de refroidissement selon l'une des revendications 1 à 8, **caractérisé en ce que** dans la chambre d'immersion (20) dont le liquide de refroidissement (48) a été évacué, le mandrin de frettage (12) peut être sollicité, de préférence par l'intermédiaire de rampes perforées (52) dotées d'orifices de sortie latéraux (54), par un gaz sous pression destiné à le sécher.

10. Dispositif de refroidissement selon l'une des revendications 1 à 9, **caractérisé par** un support (56) pour le mandrin de frettage (12), un conduit de retour (58) pouvant être fermé par un clapet anti-retour (60) et destiné à ramener l'eau qui s'égoutte dans le réservoir (22) étant disposé dans ledit support (56).

11. Dispositif de refroidissement selon l'une des revendications 1 à 10, **caractérisé en ce que** le liquide de refroidissement (48) contient un agent nettoyant et/ou anticorrosion pour le mandrin de frettage (12).

12. Procédé pour refroidir un mandrin de frettage (12), selon lequel de la chaleur peut être évacuée dudit mandrin de frettage(12) au moyen d'un refroidisseur à liquide (18), tandis qu'un outil (16) logé dans un porte-outil (14) dilaté à chaud d'un mandrin de frettage (12) chauffé se rétracte, le mandrin de frettage (12) étant placé dans une chambre d'immersion (20) du refroidisseur à liquide (18) et pouvant y baigner dans du liquide de refroidissement (48), **caractérisé en ce que** le mandrin de frettage (12) est sollicité par du liquide de refroidissement (48) dans la chambre d'immersion (20) formée par une colonne de réception (26) pour le mandrin de frettage (12) située au-dessus du réservoir (22) en élevant le niveau de liquide (24).
